# FASCICULE DE BREVET EUROPEEN

(11) **EP 4 467 825 B1**
(45) Date de publication et mention de la délivrance du brevet: **15.04.2026**
(21) Numéro de dépôt: 24305754.4
(22) Date de dépôt: 15.05.2024
(51) Int. Cl.: F16B 39/282

(54) **ARTICLE AYANT UN SYSTEME D'ASSEMBLAGE ET D'INDEXATION D'UN PREMIER ELEMENT AVEC UN SECOND ELEMENT**
ARTIKEL MIT EINEM SYSTEM ZUM ZUSAMMENBAU UND ZUR INDEXIERUNG EINES ERSTEN ELEMENTS MIT EINEM ZWEITEN ELEMENT
ARTICLE HAVING A SYSTEM FOR JOINING AND INDEXING A FIRST MEMBER WITH A SECOND MEMBER

(30) Priorité: 25.05.2023 FR 2305198
(43) Date de publication de la demande: 27.11.2024
(73) Titulaire: Compagnie des Cristalleries de Saint Louis, 57620 Saint Louis les Bitche (FR)
(72) Inventeur: LAVAUD, Jean-François, 67300 Schiltigheim (FR); TOURSEL, Antoine, 57230 Bitche (FR); TANG, Xuelin, Shenzhen 518064 (CN)
(74) Mandataire: Santarelli

(56) Documents cités:
- EP-A1- 3 321 524
- US-A- 2 372 888
- US-B1- 6 789 990
- US-B2- 7 246 927

## Description

### DOMAINE TECHNIQUE DE L'INVENTION

La présente invention concerne les articles ayant un système d'assemblage et d'indexation d'un premier élément, formé par une poignée de préhension, avec un second élément, formé par un corps.

En particulier, il peut s'agir de tout article pourvu d'un corps et d'au moins un organe de préhension, telle qu'une poignée ou une anse, à assembler sur le corps.

Par exemple, il peut s'agir d'un dispositif d'éclairage portatif, ou nomade, ou bien d'un article de maroquinerie.

### ÉTAT DE LA TECHNIQUE

On connaît de nombreux articles ayant un système d'assemblage et d'indexation d'un premier élément avec un second élément, dont en particulier des articles pourvu d'un corps et d'au moins un organe de préhension, telle qu'une poignée ou une anse, à assembler sur le corps.

Il existe de nombreux mécanismes permettant d'assujettir mécaniquement une poignée sur le corps d'un tel article.

Par exemple, on connaît des dispositifs d'éclairage portatifs, ou lampes nomades, dont la poignée est vissée sur le corps de lampe par la coopération d'une tige filetée en saillie de la poignée dans un orifice taraudé ménagé dans le corps de lampe.

L'assemblage se fait donc par vissage tandis que l'indexation, c'est-à-dire le positionnement de la poignée vis-à-vis du corps de lampe, est réalisée lorsque la tige filetée est totalement introduite dans l'orifice taraudé du corps de lampe, la poignée étant alors dans une position dite en fin de vissage. Un dispositif d'éclairage portatif ayant une poignée vissée sur un corps de lampe est connu par US 7 246 927 B2**.**

### EXPOSÉ DE L'INVENTION

L'invention vise à fournir un article ayant un système d'assemblage et d'indexation d'un premier élément avec un second élément, qui soit particulièrement fiable et précis, tout en restant simple et commode.

L'invention a ainsi pour objet, sous un premier aspect, un article selon la revendication 1, comportant un premier élément, un second élément assemblé par vissage au premier élément et un système d'assemblage et d'indexation du premier élément avec le second élément, le premier élément est formé par une poignée de préhension et présente une première cavité, le deuxième élément est formé par un corps sur lequel est assujettie mécaniquement la poignée de préhension et présente au moins une deuxième cavité, et le système d'assemblage et d'indexation étant pourvu d'un premier mécanisme muni d'un organe de blocage mobile logé au moins partiellement dans la première cavité ménagée dans le premier élément et configuré pour que, dans une première configuration de l'article, l'organe de blocage est dans une première position dans laquelle il se trouve à distance de l'au moins une deuxième cavité ménagée dans le second élément et la rotation du premier élément par rapport au second élément est autorisée et, dans une deuxième configuration de l'article dans laquelle le premier élément et le deuxième élément ont été vissés, l'organe de blocage est dans une deuxième position dans laquelle il se trouve au moins partiellement introduit à la fois dans l'au moins une deuxième cavité du second élément et dans la première cavité du premier élément de sorte à immobiliser en rotation le premier élément par rapport au second élément.

Dans la première configuration de l'article selon l'invention, le premier mécanisme du système d'assemblage et d'indexation autorise le déplacement en rotation du premier élément par rapport au deuxième élément pour les visser et permet ainsi un positionnement progressif du premier élément et du second élément l'un par rapport à l'autre, jusqu'à une position angulaire déterminée correspondant à la deuxième configuration de l'article selon l'invention.

Dans cette deuxième configuration de l'article selon l'invention, le premier mécanisme du système d'assemblage et d'indexation interdit le déplacement en rotation du premier élément par rapport au deuxième élément par le déplacement de l'organe de blocage depuis uniquement la première cavité vers l'une et l'autre des première cavité et deuxième cavité.

En d'autres termes, le premier mécanisme du système d'assemblage et d'indexation de l'article selon l'invention permet de former une butée d'assemblage du premier élément et du deuxième élément l'un avec l'autre, tout en leur assurant un assemblage fiable et une indexation précise.

Ainsi, le premier mécanisme du système d'assemblage et d'indexation de l'article selon l'invention permet de limiter le vissage du premier élément avec le deuxième élément.

Des caractéristiques préférées particulièrement simples, commodes et économiques de l'article selon l'invention sont présentées ci-dessous.

L'organe de blocage est magnétique.

Le premier élément présente une tige munie à une extrémité d'un embout fileté et le système d'assemblage et d'indexation présente un support de montage qui est assujetti mécaniquement dans le second élément et contre lequel est immobilisé le premier élément par vissage de l'embout fileté

Le support de montage présente une pluralité de deuxièmes cavités prévues pour recevoir au moins partiellement l'organe de blocage de sorte à autoriser une pluralité de positions d'indexation du premier élément par rapport au deuxième élément.

Le support de montage présente une forme globalement cylindrique définissant un premier logement, le système d'assemblage et d'indexation présente une première bague de montage logée dans le premier logement et pourvue d'un filetage interne configuré pour recevoir l'embout fileté du premier élément.

La première bague de montage est pourvue d'une face inférieure crantée et le système d'assemblage et d'indexation présente en outre une deuxième bague de montage qui est disposée en regard de la première bague de montage et qui est pourvue d'une face supérieure crantée qui est complémentaire de la face inférieure crantée de la première bague de montage.

Le support de montage est pourvu d'au moins une rainure ménagée dans son premier logement et la deuxième bague de montage est pourvue d'au moins une oreille de positionnement disposée dans l'au moins une rainure.

Cela permet d'immobiliser en rotation la deuxième bague de montage dans le support de montage et donc aussi la première bague de montage lorsque la face supérieure crantée et la face inférieure crantée coopèrent.

Le système d'assemblage et d'indexation est pourvu en outre d'au moins un organe élastique configuré pour solliciter la deuxième bague de montage pour la rapprocher de la première bague de montage.

L'au moins un organe élastique est formé d'une ou plusieurs rondelles ressort.

Le système d'assemblage et d'indexation est pourvu en outre d'un capot assujetti mécaniquement sur le support de montage, avec l'au moins un organe élastique qui est interposé entre le capot et la deuxième bague de montage.

L'article est un dispositif éclairage portatif, ou nomade.

L'article comporte une source lumineuse et un module d'alimentation de la source lumineuse qui sont disposés dans le corps, ainsi qu'un module de commande formé d'un bouton de commande disposé sur la poignée de préhension et d'une tige de commande traversant la poignée de préhension et disposée en saillie dans le corps jusqu'au module d'alimentation pour l'activation et/ou la désactivation de la source lumineuse.

En variante, l'article est un article de maroquinerie.

L'invention a aussi pour objet, sous un second aspect, un procédé d'assemblage et/ou de désassemblage par vissage et d'indexation d'un premier élément avec un second élément d'un article tel que décrit ci-dessus, selon la revendication 13, comportant les étapes de :
- positionner un organe de blocage dans une première cavité du premier élément et maintenir l'organe de blocage à l'aide d'un outil positionné à l'opposé de la première cavité ;
- assembler par vissage le premier élément et le deuxième élément en maintenant l'outil en position, l'article étant dans une première configuration, jusqu'à une position d'indexation où l'organe de blocage se trouve en regard d'une deuxième cavité du deuxième élément ;
- retirer l'outil de sorte à positionner l'organe de blocage à la fois dans la première cavité et dans la deuxième cavité et ainsi immobiliser en rotation le premier élément et le deuxième élément l'un par rapport à l'autre, l'article étant alors dans une deuxième configuration.

Le procédé comporte les étapes de repositionner l'outil à l'opposé de la première cavité pour extraire l'organe de blocage de la deuxième cavité du deuxième élément ; et désassembler par dévissage le premier élément et le deuxième élément.

### BRÈVE DESCRIPTION DES FIGURES

L'invention, selon un exemple de réalisation, sera bien comprise et ses avantages apparaitront mieux à la lecture de la description détaillée qui suit, donnée à titre indicatif et nullement limitatif, en référence aux dessins annexés.
La figure 1 est une vue de face d'un dispositif d'éclairage portatif pourvu d'une poignée de préhension, d'un corps de lampe et d'un système d'assemblage et d'indexation configuré pour visser la poignée sur le corps de lampe.
La figure 2 est une vue en coupe représentée II-II sur la figure 1.
La figure 3 est une vue de face de la poignée de préhension et du système d'assemblage et d'indexation pris isolément.
La figure 4 est une vue en perspective éclatée de la poignée de préhension et du système d'assemblage et d'indexation visibles sur la figure 3.
La figure 5 est une vue en perspective isolée de la poignée de préhension.
La figure 6 est une en perspective montrant une platine de montage du système d'assemblage et d'indexation.
La figure 7 est une vue similaire à celle de la figure 6, prise selon un angle de vue différent.
La figure 8 est une vue en perspective montrant isolément une première bague de montage du système d'assemblage et d'indexation.
La figure 9 est une vue de dessous de la première bague de montage de la figure 8.
La figure 10 est une vue en perspective montrant isolément une deuxième bague de montage du système d'assemblage et d'indexation.
La figure 11 est une vue de dessus de la deuxième bague de montage de la figure 10.
La figure 12 est une vue en perspective montrant isolément un capot du système d'assemblage et d'indexation
La figure 13 est une vue similaire à celle de la figure 14, prise selon un angle de vue différent.
La figure 14 est une vue en coupe représentée XIV-XIV sur la figure 3, montrant l'ensemble formé de la poignée de préhension et du système d'assemblage et d'indexation dans une configuration assemblée de l'article, dite deuxième configuration.
La figure 15 est une vue similaire à celle de la figure 14, montrant l'ensemble formé de la poignée de préhension et du système d'assemblage et d'indexation dans une configuration désassemblée de l'article, dite première configuration.

### DESCRIPTION DÉTAILLÉE DE L'INVENTION

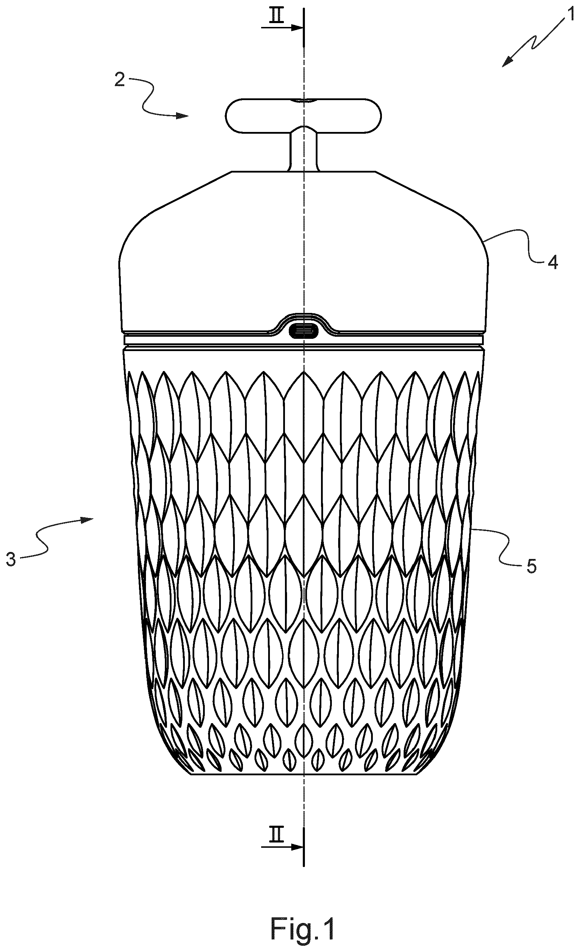

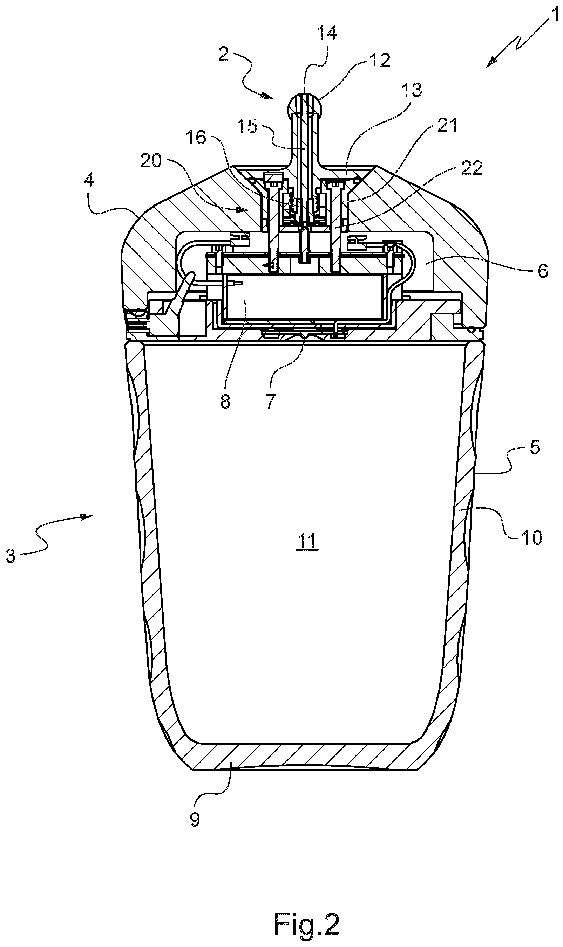

Les figures 1 et 2 illustrent un article, en particulier ici un dispositif d'éclairage portatif 1, ou nomade.

Ce dispositif 1 est muni d'un premier élément formé ici par une poignée de préhension 2 et d'un deuxième élément formé ici par un corps 3.

La poignée de préhension 2 est assujettie mécaniquement, par vissage, avec le corps 3.

Dans l'exemple illustré, le corps 3 comporte une partie supérieure 4 sur laquelle est montée la poignée de préhension 2 et une partie inférieure 5 assujettie mécaniquement avec la partie supérieure 4, par exemple par vissage, encliquetage ou tout autre moyen mécanique d'assujettissement.

Comme visible sur la figure 2, la partie supérieure 4 présente un logement de réception 6 et le dispositif 1 comporte une source lumineuse 7 et un module d'alimentation 8 de la source lumineuse 7 qui sont disposés dans le logement de réception 6.

La source lumineuse 7 est agencée de sorte à être dirigée vers la partie inférieure 5 qui forme ici un organe de diffusion de la lumière émise par la source lumineuse 7 lorsqu'elle est activée par le module d'alimentation 8.

La partie inférieure 5 présente ici un fond plat 9 et une paroi latérale cylindrique 10 qui s'étend depuis le fond plat 9 et qui défini un espace interne de diffusion 11.

Le dispositif 1 peut ainsi être posé par son fond plat 9 sur un support quelconque.

Dans l'exemple illustré, la partie inférieure 5 est par exemple en cristal tandis que la partie supérieure 4 est en bois ou composite. D'autres matériaux peuvent être utilisés.

La poignée de préhension 2 est formée ici d'un organe de préhension et d'actionnement 12, et d'une platine de montage 13 raccordée à l'organe de préhension 12 et configurée pour être au moins partiellement montée dans le logement de réception 6 de la partie supérieure 4, à l'opposée de la source lumineuse 7.

Le dispositif 1 comporte en outre un module de commande formé d'un bouton de commande 14 disposé sur l'organe de préhension et d'actionnement 12 de la poignée de préhension 2, d'une tige de commande 15 traversant la platine de montage 13 de la poignée de préhension 2 et d'un embout de guidage 16 fixé sur une extrémité de la tige de commande 15, à l'opposé du bouton de commande 14.

La tige de commande 15 est disposée en saillie dans le logement de réception 6 de la partie supérieure 4 et présente une extrémité libre qui vient en contact avec le module d'alimentation 8 pour l'activation et/ou la désactivation de la source lumineuse 7 du dispositif 1.

Dans le dispositif 1 selon l'invention, la poignée de préhension 2 est assujettie mécaniquement au corps 3 dans une position dite d'indexation.

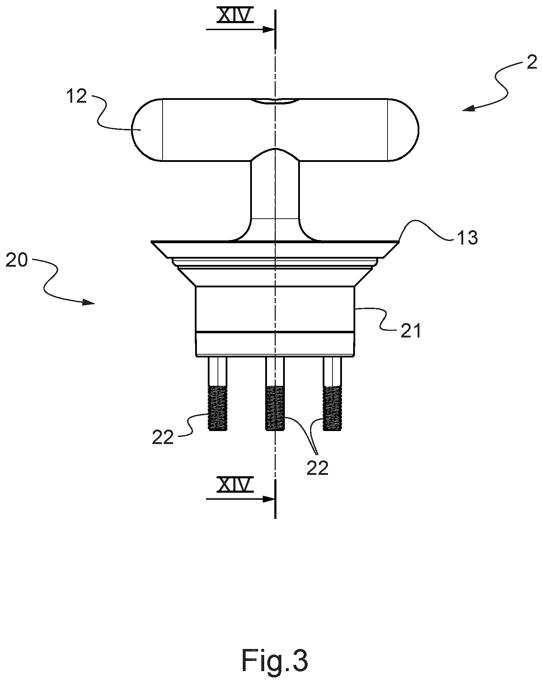

En particulier, comme visible sur les figures 2 et 3, le dispositif comporte un système d'assemblage et d'indexation 20 pourvu d'un support de montage 21 sur lequel est disposée la platine de montage 13.

Le support de montage 21 est quant à lui configuré pour être assujetti mécaniquement, ici à l'aide de premières vis 22, au module d'alimentation 8 dans le logement de réception 6 de la partie supérieure 4.

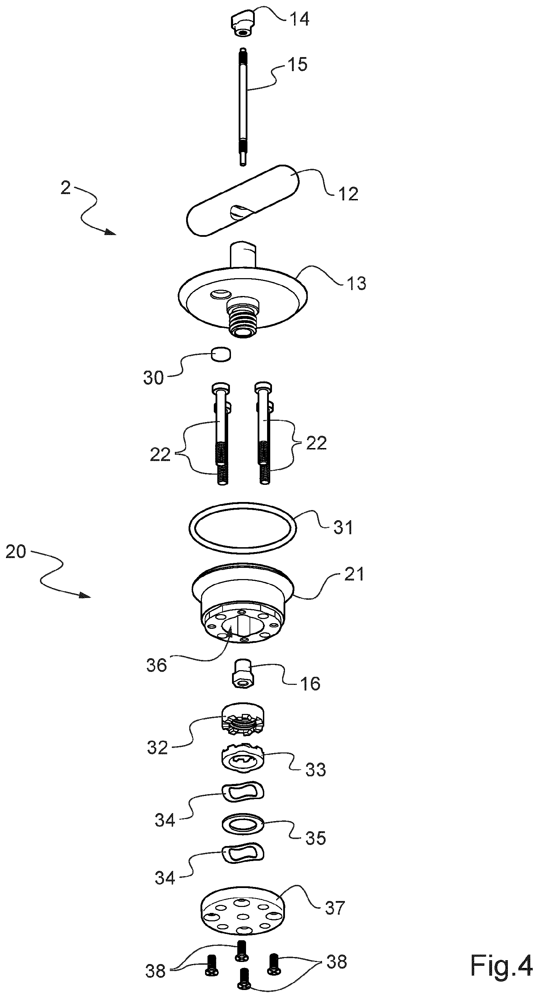

On va décrire plus en détail en référence aux figures 4 à 13 l'ensemble formé de la poignée de préhension 2 et du système d'assemblage et d'indexation 20.

Comme visible sur la figure 4, l'ensemble visé ci-dessus est formé en particulier de la poignée de préhension 2, dont son organe de préhension et d'actionnement 12 et sa platine de montage 13, du module de commande formé du bouton de commande 14, de la tige de commande 15 et de l'embout de guidage 16, et du système d'assemblage et d'indexation 20, dont son support de montage 21 et les premières vis 22.

En outre, le système d'assemblage et d'indexation 20 est pourvu d'un premier mécanisme muni d'un organe de blocage mobile qui est ici magnétique et en particulier formé par un aimant 30, lequel aimant 30 est situé entre la platine de montage 13 et le support de montage 21.

Le système d'assemblage et d'indexation 20 est pourvu aussi d'un organe d'étanchéité 31, ici un joint torique, qui est disposé entre la platine de montage 13 et le support de montage 21.

Dans l'exemple illustré, le système d'assemblage et d'indexation 20 est pourvu en outre d'une première bague de montage 32, d'une deuxième bague de montage 33 et d'une pluralité d'organes élastiques qui sont formés ici par des rondelles ressort incurvées 34 et plate 35, l'ensemble de ces éléments formant un deuxième mécanisme.

Le support de montage 21 présente une forme globalement cylindrique définissant un premier logement 36 prévu pour recevoir la première bague de montage 32, la deuxième bague de montage 33 et les rondelles ressort incurvées 34 et plate 35.

Dans l'exemple illustré, le système d'assemblage et d'indexation 20 est pourvu aussi d'un capot 37 assujetti mécaniquement sur le support de montage 21, à l'opposé de la platine de montage 13, à l'aide de deuxièmes vis 38.

Le système d'assemblage et d'indexation 20 est ici configuré de sorte que les rondelles ressort incurvées 34 et plate 35 prennent appui sur le capot 37.

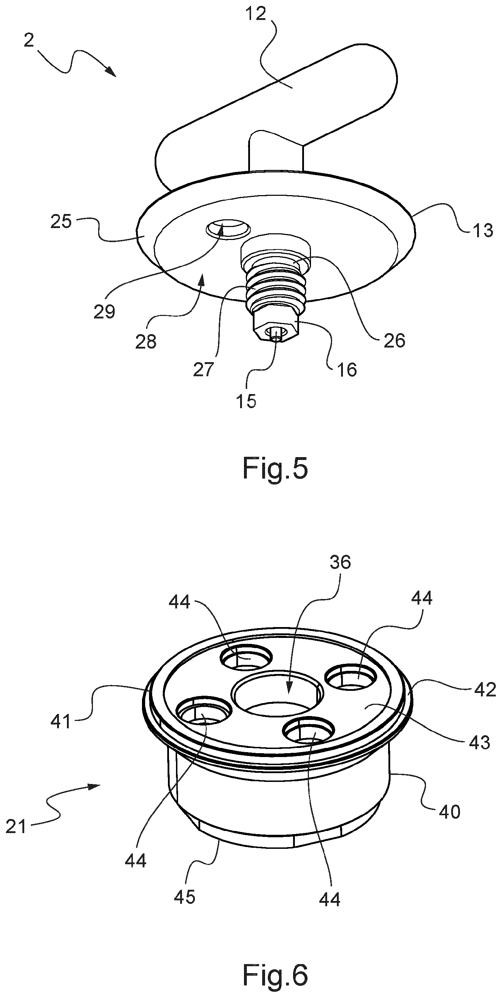

En référence à la figure 5, la platine de montage 13 comporte une paroi principale 25 et une tige 26 s'étendant en saillie de la paroi principale 25 et munie à une extrémité d'un embout fileté 27.

La platine de montage 13 présente une face inférieure 28 dans laquelle est ménagée une première cavité 29.

La première cavité 29 est prévue pour recevoir au moins partiellement l'aimant 30.

Le bouton de commande 14 est configuré pour être raccordé à la tige de commande 15, du côté de l'organe de préhension et d'actionnement 12.

L'embout de guidage 16 est configuré pour être raccordé à la tige de commande 15, à l'opposé du côté de l'embout fileté 27.

La tige de commande 15 traverse ainsi l'organe de préhension et d'actionnement 12 et la platine de montage 13 jusqu'à saillir au-delà de l'embout fileté 27.

Une extrémité libre de la tige de contact 15 saille aussi de l'embout de guidage 16.

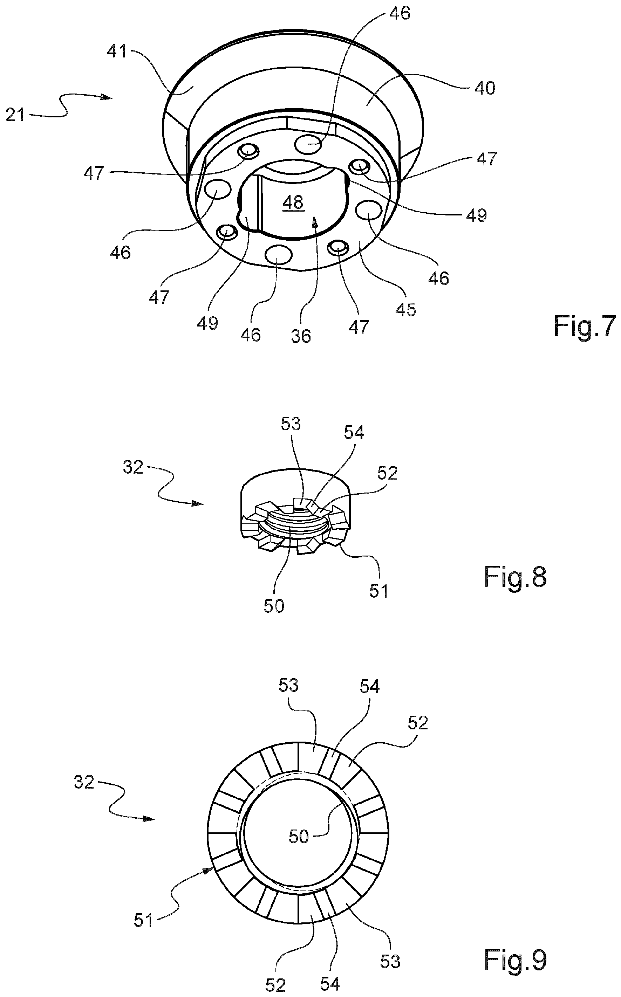

En référence aux figures 6 et 7, le support de montage 21 globalement cylindrique présente un corps principal 40 surmonté d'une paroi supérieure 41 pourvue d'un bord d'étanchéité 42 et d'une face supérieure 43.

Le bord d'étanchéité 42 est prévu pour recevoir l'organe d'étanchéité 31.

Le support de montage 21 présente ici une pluralité de deuxièmes cavités 44 ménagées dans la face supérieure 43.

Le premier logement 36 traverse le corps principal 40 et débouche dans la face supérieure 43.

Le corps principal 40 présente en outre ici une paroi inférieure 45, des orifices traversant 46 qui débouchent dans la paroi inférieure 45 et à l'opposé dans les deuxièmes cavités 44, et des trous borgnes taraudés 47 qui débouchent dans la paroi inférieure 45.

Les orifices traversant 46 sont prévus pour recevoir les premières vis 22, avec les têtes de vis qui sont reçues au fond des deuxièmes cavités 44, tandis que les trous borgnes 47 sont prévus pour recevoir les deuxièmes vis 38.

Le corps principal 40 présente une paroi interne 49 délimitant le premier logement 36 et des rainures 48 ménagées dans la paroi interne 49 et qui débouchent dans la paroi inférieure 45.

En référence aux figures 8 et 9, la première bague de montage 32, qui est prévue pour être logée dans le premier logement 36 du support de montage 21, présente une forme globalement annulaire et est pourvue d'un filetage interne 50 et d'une face inférieure crantée 51.

Le système d'assemblage et d'indexation 20 est ici configuré de sorte que l'embout fileté 27 de la platine de montage 13 de la poignée de préhension 2 coopère avec le filetage interne 50 de la première bague de montage 32.

La face inférieure crantée 51 présente une pluralité de portions en élévation, dites bosses 52, séparées d'une pluralité de portions en renfoncement, dites creux 53.

Les successions de bosses 52 et creux 53 successifs sont ici séparées chacune d'une portion en rampe 54.

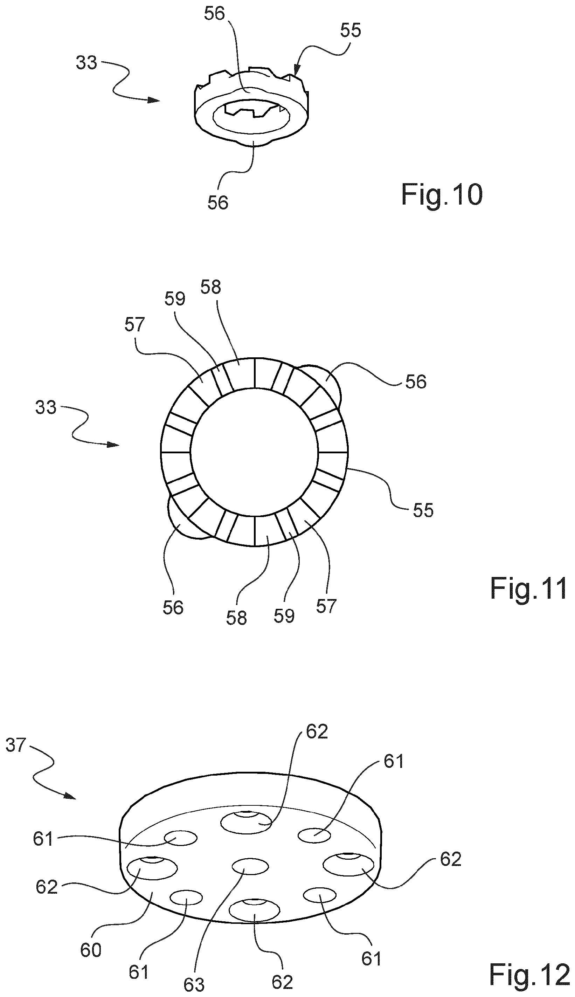

En référence aux figures 10 et 11, la deuxième bague de montage 33, qui est prévue aussi pour être logée dans le premier logement 36 du support de montage 21, en regard de la première bague de montage 32, présente une forme globalement annulaire et est pourvue d'une face supérieure crantée 55 qui est complémentaire de la face inférieure crantée 51 de la première bague de montage 32, et d'oreilles de positionnement 56.

Le système d'assemblage et d'indexation 20 est ici configuré de sorte que les oreilles de positionnement 56 de la deuxième bague de montage 33 sont reçues dans les rainures 49 du support de montage 21 et la face supérieure crantée 55 de la deuxième bague de montage 33 coopère avec la face inférieure crantée 51 de la première bague de montage 32.

La face supérieure crantée 55 présente une pluralité de portions complémentaires en élévation, dites bosses complémentaires 57, séparées d'une pluralité de portions complémentaires en renfoncement, dites creux complémentaires 58.

Les successions de bosses complémentaires 57 et creux complémentaires 58 successifs sont ici séparées chacune d'une portion complémentaires en rampe 59.

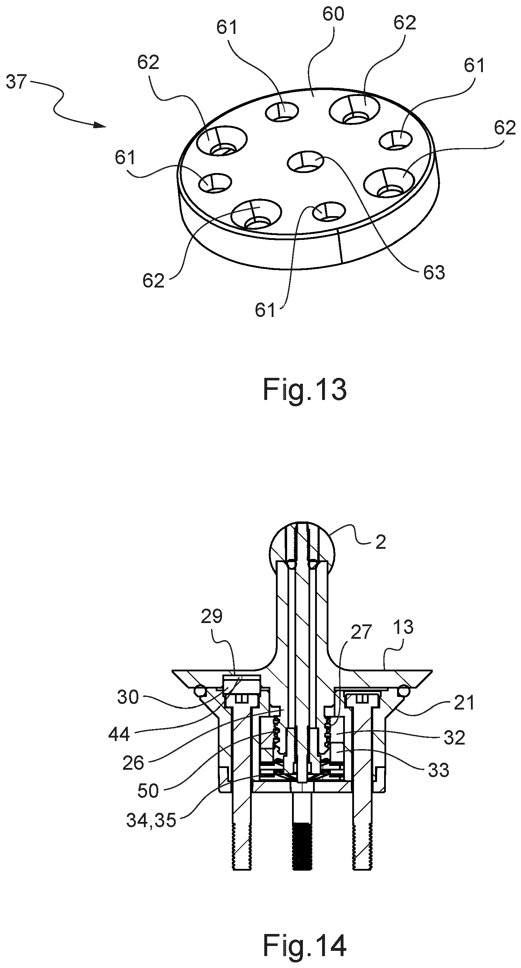

En référence aux figures 12 et 13, le capot 37 qui est prévu pour être assujetti mécaniquement sur le support de montage 21, à l'opposé de la platine de montage 13, présente une paroi de fond 60 dans laquelle sont ménagés une pluralité d'orifices traversant complémentaires 61, de trous complémentaires traversant 62, ainsi qu'un orifice central traversant 63.

Les orifices traversant complémentaires 46 sont prévus pour recevoir les premières vis 22, les trous complémentaires traversant 62 sont prévus pour recevoir les deuxièmes vis 38 avec les têtes de vis qui sont reçues au fond des complémentaires traversant 62 et l'orifice central traversant 63 est prévu pour recevoir l'extrémité libre de la tige de commande 15 du module de commande.

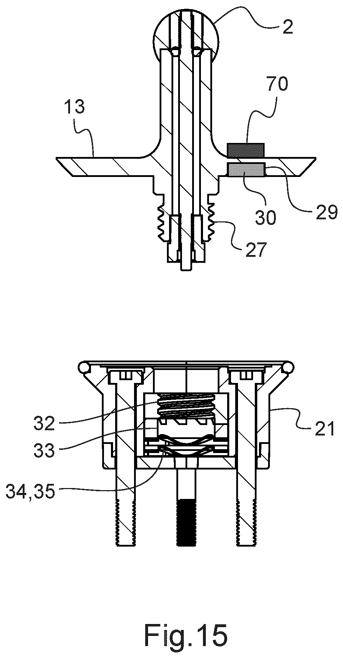

On va maintenant décrire, en référence aux figures 14 et 15, l'assemblage et le désassemblage de la poignée de préhension 2 avec le corps 3, à l'aide du système d'assemblage et d'indexation 20 et d'un outil 70.

Sur la figure 14, la poignée de préhension 2 est assemblée avec le corps dans une position d'indexation, dite deuxième position, définie par la présence de l'aimant 30 à la fois dans la première cavité 29 et dans une des deuxièmes cavités 44.

L'article se trouve ainsi dans une configuration assemblée, dite deuxième configuration, dans laquelle la rotation de la poignée de préhension 2 par rapport au corps 3 est empêchée.

En d'autres termes, cette configuration permet d'immobiliser en rotation la poignée de préhension 2 par rapport au corps.

En particulier, la face inférieure 28 de la platine de montage 13 se trouve immobilisée contre la face supérieure 43 du support de montage 21.

En outre, dans la configuration assemblée, l'embout fileté 27 de la tige 26 de la platine de montage 13 est vissé dans le filetage interne 50 de la première bague de montage 32, les rondelles ressort incurvées 34 et plate 35 sollicitent la deuxième bague 33 contre la première bague de montage 32 de sorte que la face supérieure crantée 55 de la deuxième bague de montage 33 coopère avec la face inférieure crantée 51 de la première bague de montage 32.

La sollicitation exercée par les rondelles ressort incurvées 34 et plate 35 permet toutefois à la première bague de montage 32 de tourner par rapport à la deuxième bague de montage 33 lorsque l'embout fileté de la tige 26 de la platine de montage 13 est vissé au-delà d'un certain seuil, même lorsque la face supérieure crantée 55 de la deuxième bague de montage 33 coopère avec la face inférieure crantée 51 de la première bague de montage 32.

En d'autres termes, le second mécanisme est configuré de sorte que la première bague de montage 32 n'est pas verrouillée en rotation, autorisant ainsi un serrage même au-delà d'un certain seuil, sans toutefois détériorer l'article.

Une telle sollicitation exercée par les rondelles ressort incurvées 34 et plate 35, en combinaison avec la coopération de la face supérieure crantée 55 de la deuxième bague de montage 33 avec la face inférieure crantée 51 de la première bague de montage 32, permet en outre de compenser un éventuel jeu axial issu de la coopération entre l'embout fileté 27 de la tige 26 de la platine de montage 13 et le filetage interne 50 de la première bague de montage 32.

Sur la figure 15, la poignée de préhension 2 est désassemblée du corps.

L'article se trouve ainsi dans une configuration désassemblée, dite première configuration, dans laquelle la rotation de la poignée de préhension 2 par rapport au corps 3 est autorisée.

En d'autres termes, cette configuration permet la rotation et donc le vissage et/ou le dévissage de la poignée de préhension 2 par rapport au corps.

En particulier, la platine de montage 13 se trouve à distance du support de montage 21 et l'aimant 30 est introduit seulement dans la première cavité 29 de la platine de montage, où il se trouve dans une première position.

L'aimant 30 est maintenu dans sa première position grâce à l'outil 70 qui est positionné en regard de l'aimant 30 mais du côté opposé de la platine de montage 13.

Par exemple, il peut s'agir d'un outil présentant des propriétés magnétiques capables d'attirer l'aimant 30.

En outre, dans la configuration désassemblée, l'embout fileté 27 de la tige 26 de la platine de montage 13 est dévissé de la première bague de montage 32, les rondelles ressort incurvées 34 et plate 35 ne permettent pas de solliciter la deuxième bague 33 contre la première bague 32 pour qu'elles coopèrent comme dans la configuration assemblée.

Plus généralement, un procédé d'assemblage puis de désassemblage par vissage et d'indexation de la poignée de préhension 2 avec le corps 3 de l'article comporte les étapes de :
- positionner l'aimant 30 dans la première cavité 29 de la platine de montage 13 et le maintenir à l'aide de l'outil 70 positionné à l'opposé ;
- assembler par vissage la poignée de préhension 2 et le corps 3 en maintenant l'outil 70 en position, l'article 1 étant dans la première configuration, jusqu'à la position d'indexation où l'aimant 30 se trouve en regard d'une deuxième cavité 44 du support de montage 21 ;
- retirer l'outil de sorte à positionner l'aimant 30 à la fois dans la première cavité 29 et dans la deuxième cavité 44 et ainsi immobiliser en rotation la poignée de préhension 2 et le corps 3 l'un par rapport à l'autre, l'article 1 étant alors dans la deuxième configuration ;
- repositionner l'outil 70 à l'opposé de la première cavité 29 pour extraire l'aimant 30 de la deuxième cavité 44 ;
- désassembler par dévissage la poignée de préhension 2 et le corps 3.

Des variantes non illustrées sont décrites ci-dessous.

La poignée de préhension du dispositif d'éclairage peut être configurée pour être suspendue.

L'article n'est pas un dispositif d'éclairage portatif, ou nomade, mais plutôt un article de maroquinerie, muni d'une poignée ou d'une bandoulière à assembler sur un corps muni d'un compartiment de stockage.

Le deuxième élément de l'article peut comporter plus ou moins de cavités, et donc plus ou moins de positions d'indexation, du premier élément sur le deuxième élément.

Les première et deuxième bagues de montage peuvent être formées en une seule pièce montée fixe en rotation dans le support de montage.

Les première et deuxième bagues de montage peuvent être formées en une seule pièce venant de matière avec le support de montage.

Le système d'assemblage et d'indexation peut être dépourvu du second mécanisme muni des bagues et des organes élastiques.

On rappelle plus généralement que l'invention ne se limite pas aux exemples décrits et représentés.

## Revendications

1. Article comportant un premier élément (2), formé par une poignée de préhension, un second élément (3), formé par un corps sur lequel est assujettie mécaniquement la poignée de préhension, assemblé par vissage au premier élément **caractérisé en ce que** l'article comporte un système d'assemblage et d'indexation (20) du premier élément avec le second élément, où le premier élément présente une première cavité (29), le deuxième élément présente au moins une deuxième cavité (44), et le système d'assemblage et d'indexation est pourvu d'un premier mécanisme muni d'un organe de blocage mobile (30) logé au moins partiellement dans la première cavité ménagée dans le premier élément et configuré pour que, dans une première configuration de l'article, l'organe de blocage est dans une première position dans laquelle il se trouve à distance de l'au moins une deuxième cavité ménagée dans le second élément et la rotation du premier élément par rapport au second élément est autorisée et, dans une deuxième configuration de l'article dans laquelle le premier élément et le deuxième élément ont été vissés, l'organe de blocage est dans une deuxième position dans laquelle il se trouve au moins partiellement introduit à la fois dans l'au moins une deuxième cavité du second élément et dans la première cavité du premier élément de sorte à immobiliser en rotation le premier élément par rapport au second élément.

2. Article selon la revendication 1, **caractérisé en ce que** l'organe de blocage (30) est magnétique.

3. Article selon l'une des revendications 1 et 2, **caractérisé en ce que** le premier élément (2) présente une tige (26) munie à une extrémité d'un embout fileté (27) et le système d'assemblage et d'indexation (20) présente un support de montage (21) qui est assujetti mécaniquement dans le second élément (3) et contre lequel est immobilisé le premier élément par vissage de l'embout fileté.

4. Article selon la revendication 3, **caractérisé en ce que** le support de montage (21) présente une pluralité de deuxièmes cavités (44) prévues pour recevoir au moins partiellement l'organe de blocage (30) de sorte à autoriser une pluralité de positions d'indexation du premier élément (2) par rapport au deuxième élément (3).

5. Article selon l'une des revendications 3 et 4, **caractérisé en ce que** le support de montage (21) présente une forme globalement cylindrique définissant un premier logement (36), le système d'assemblage et d'indexation (20) présente une première bague de montage (32) logée dans le premier logement et pourvue d'un filetage interne (50) configuré pour recevoir l'embout fileté (27) du premier élément (2).

6. Article selon la revendication 5, **caractérisé en ce que** la première bague de montage (32) est pourvue d'une face inférieure crantée (51) et le système d'assemblage et d'indexation (20) présente en outre une deuxième bague de montage (33) qui est disposée en regard de la première bague de montage et qui est pourvue d'une face supérieure crantée (55) qui est complémentaire de la face inférieure crantée de la première bague de montage.

7. Article selon la revendication 6, **caractérisé en ce que** le support de montage (21) est pourvu d'au moins une rainure (49) ménagée dans son premier logement (36) et la deuxième bague de montage (33) est pourvue d'au moins une oreille de positionnement (56) disposée dans l'au moins une rainure.

8. Article selon l'une des revendications 6 et 7, **caractérisé en ce que** le système d'assemblage et d'indexation (20) est pourvu en outre d'au moins un organe élastique (34, 35) configuré pour solliciter la deuxième bague de montage (33) pour la rapprocher de la première bague de montage (32).

9. Article selon la revendication 8, **caractérisé en ce que** l'au moins un organe élastique (34, 35) est formé d'une ou plusieurs rondelles ressort.

10. Article selon l'une des revendications 8 et 9, **caractérisé en ce que** le système d'assemblage et d'indexation (20) est pourvu en outre d'un capot (37) assujetti mécaniquement sur le support de montage (21), avec l'au moins un organe élastique qui est interposé entre le capot et la deuxième bague de montage (33).

11. Article selon l'une quelconque des revendications 1 à 10, **caractérisé en ce qu'**il s'agit d'un dispositif éclairage portatif, ou nomade.

12. Article selon la revendication 11, **caractérisé en ce qu'**il comporte une source lumineuse (7) et un module d'alimentation (8) de la source lumineuse qui sont disposés dans le corps, ainsi qu'un module de commande formé d'un bouton de commande (14) disposé sur la poignée de préhension et d'une tige de commande (15) traversant la poignée de préhension et disposée en saillie dans le corps jusqu'au module d'alimentation pour l'activation et/ou la désactivation de la source lumineuse.

13. Procédé d'assemblage et/ou de désassemblage par vissage et d'indexation d'un premier élément (2) avec un second élément (3) d'un article (1) selon l'une quelconque des revendications 1 à 12, comportant les étapes de :
- positionner un organe de blocage (30) dans une première cavité (29) du premier élément et maintenir l'organe de blocage à l'aide d'un outil (70) positionné à l'opposé de la première cavité ;
- assembler par vissage le premier élément et le deuxième élément en maintenant l'outil en position, l'article (1) étant dans une première configuration, jusqu'à une position d'indexation où l'organe de blocage se trouve en regard d'une deuxième cavité (44) du deuxième élément ;
- retirer l'outil de sorte à positionner l'organe de blocage à la fois dans la première cavité et dans la deuxième cavité et ainsi immobiliser en rotation le premier élément et le deuxième élément l'un par rapport à l'autre, l'article étant alors dans une deuxième configuration.

14. Procédé selon la revendication 13, **caractérisé en ce que** qu'il comporte les étapes de repositionner l'outil (70) à l'opposé de la première cavité (29) pour extraire l'organe de blocage (30) de la deuxième cavité (44) du deuxième élément (3) ; et désassembler par dévissage le premier élément (2) et le deuxième élément.

## Patentansprüche

1. Artikel, der ein erstes Element (2), das durch einen Handgriff gebildet wird, und ein zweites Element (3) umfasst, das durch einen Körper, an dem der Handgriff mechanisch befestigt ist, gebildet wird und durch Verschraubung mit dem ersten Element verbunden ist, **dadurch gekennzeichnet, dass** der Artikel ein System zur Verbindung und Indexierung (20) des ersten Elements mit dem zweiten Element umfasst, wobei das erste Element einen ersten Hohlraum (29) aufweist, das zweite Element mindestens einen zweiten Hohlraum (44) aufweist und das Verbindungs- und Indexierungssystem mit einem ersten Mechanismus versehen ist, der mit einem beweglichen Sperrelement (30) versehen ist, das mindestens teilweise in dem ersten in dem ersten Element vorgesehenen Hohlraum untergebracht und so konfiguriert ist, dass sich das Sperrelement in einer ersten Konfiguration des Artikels in einer ersten Position befindet, in der es sich im Abstand zu dem mindestens einen zweiten Hohlraum in dem zweiten Element vorgesehenen Hohlraum befindet und die Drehung des ersten Elements gegenüber dem zweiten Element zulässig ist, und in einer zweiten Konfiguration des Artikels, in der das erste Element und das zweite Element verschraubt wurden, sich das Sperrelement in einer zweiten Position befindet, in der es sich mindestens teilweise sowohl in dem mindestens zweiten Hohlraum des zweiten Elements als auch in dem ersten Hohlraum des ersten Elements befindet, so dass es das erste Element in Bezug auf das zweite Element drehfest fixiert.

2. Artikel nach Anspruch 1, **dadurch gekennzeichnet, dass** das Sperrelement (30) magnetisch ist.

3. Artikel nach einem der Ansprüche 1 und 2, **dadurch gekennzeichnet, dass** das erste Element (2) einen Stab (26) aufweist, der an einem Ende mit einem Gewindeansatz (27) versehen ist, und das Verbindungs- und Indexierungssystem (20) eine Montagehalterung (21) aufweist, die mechanisch in dem zweiten Element (3) befestigt ist und an den das erste Element durch Einschrauben des Gewindeansatzes fixiert wird.

4. Artikel nach Anspruch 3, **dadurch gekennzeichnet, dass** die Montagehalterung (21) eine Vielzahl von zweiten Hohlräume (44) aufweist, die vorgesehen sind, um das Sperrelement (30) mindestens teilweise aufzunehmen, so dass eine Vielzahl von Indexierungspositionen des ersten Elements (2) in Bezug auf das zweite Element (3) zulässig sind.

5. Artikel nach einem der Ansprüche 3 und 4, **dadurch gekennzeichnet, dass** die Montagehalterung (21) eine insgesamt zylindrische Form aufweist, die eine erste Aufnahme (36) definiert, das Verbindungs- und Indexierungssystem (20) einen ersten Montagering (32) aufweist, der in der ersten Aufnahme untergebracht ist und mit einem Innengewinde (50) versehen ist, das so konfiguriert ist, dass es den Gewindeansatz (27) des ersten Elements (2) aufnimmt.

6. Artikel nach Anspruch 5, **dadurch gekennzeichnet, dass** der erste Montagering (32) mit einer gezahnten Unterseite (51) versehen ist und das Verbindungs- und Indexierungssystem (20) ferner einen zweiten Montagering (33) aufweist, der gegenüber dem ersten Montagering angeordnet ist und mit einer gezahnten Oberseite (55) versehen ist, die die gezahnte Unterseite des ersten Montagerings komplementär zu.

7. Artikel nach Anspruch 6, **dadurch gekennzeichnet, dass** die Montagehalterung (21) mit mindestens einer Nut (49) versehen ist, die in ihrer ersten Aufnahme (36) vorgesehen ist, und der zweite Montagering (33) mit mindestens einer Positionierungsnase (56) versehen ist, die in der mindestens einen Nut angeordnet ist.

8. Artikel nach einem der Ansprüche 6 und 7, **dadurch gekennzeichnet, dass** das Verbindungs- und Indexierungssystem (20) ferner mit mindestens einem elastischen Element (34, 35) versehen ist, das so konfiguriert ist, dass es den zweiten Montagering (33) vorspannt, um ihn dem ersten Montagering (32) näher zu bringen.

9. Artikel nach Anspruch 8, **dadurch gekennzeichnet, dass** das mindestens eine elastische Element (34, 35) aus einer oder mehreren Federscheiben gebildet ist.

10. Artikel nach einem der Ansprüche 8 und 9, **dadurch gekennzeichnet, dass** das Verbindungs- und Indexierungssystem (20) ferner mit einer auf der Montagehalterung (21) mechanisch befestigten Haube (37) versehen ist, wobei das mindestens eine elastische Element zwischen der Haube und dem zweiten Montagering (33) eingelegt ist.

11. Artikel nach einem der Ansprüche 1 bis 10, **dadurch gekennzeichnet, dass** es sich um eine tragbare oder mobile Beleuchtungsvorrichtung handelt.

12. Artikel nach Anspruch 11, **dadurch gekennzeichnet, dass** er eine Lichtquelle (7) und ein Versorgungsmodul (8) der Lichtquelle umfasst, die in dem Körper angeordnet sind, sowie ein Steuermodul, das aus einem an dem Handgriff angeordneten Steuerknopf (14) und einem Steuerstab (15) besteht, der den Handgriff durchquert und in dem Körper vorstehend bis zu dem Versorgungsmodul zum Aktivieren und/oder Deaktivieren der Lichtquelle angeordnet ist.

13. Verfahren zum Verbinden und/oder Demontieren durch Verschrauben und Indexieren eines ersten Elements (2) mit einem zweiten Element (3) eines Artikels (1) nach einem der Ansprüche 1 bis 12, umfassend die folgenden Schritte:
- Positionieren eines Sperrelements (30) in einem ersten Hohlraum (29) des ersten Elements und Halten des Sperrelements mithilfe eines Werkzeugs (70), das gegenüber dem ersten Hohlraum positioniert ist;
- Verbinden des ersten Element und des zweiten Elements durch Verschrauben, wobei das Werkzeug in Position gehalten wird, wobei sich der Artikel (1) in einer ersten Konfiguration befindet, bis zu einer Indexierungsposition, in der sich das Sperrelement gegenüber einem zweiten Hohlraum (44) des zweiten Elements befindet;
- Entfernen des Werkzeugs, so dass das Sperrelement sowohl in dem ersten als auch in dem zweiten Hohlraum positioniert wird und so das erste Element und das zweite Element in Bezug aufeinander in Drehung drehfest fixiert werden, wobei sich der Artikel dann in einer zweiten Konfiguration befindet.

14. Verfahren nach Anspruch 13, **dadurch gekennzeichnet, dass** es die Schritte des Neupositionierens des Werkzeugs (70) gegenüber dem ersten Hohlraum (29), um das Sperrelement (30) aus dem zweiten Hohlraum (44) des zweiten Elements (3) herauszuziehen; und des Demontierens des ersten Elements (2) und des zweiten Elements durch Abschrauben umfasst.

## Claims

1. An item including a first element (2), formed by a gripping handle, a second element (3), formed by a body to which the gripping handle is mechanically fastened, assembled by screwing to the first element, **characterised in that** the item comprises a system for assembling and indexing (20) the first element to the second element, where the first element has a first cavity (29), the second element has at least one second cavity (44), and the assembly and indexing system is provided with a first mechanism fitted with a movable blocking member (30) housed at least partially in the first cavity provided in the first element and configured so that, in a first configuration of the item, the blocking member is in a first position in which it is at a distance from the least one second cavity provided in the second element and rotation of the first element relative to the second element is allowed and, in a second configuration of the item in which the first element and the second element have been screwed together, the blocking member is in a second position in which it is at least partially introduced both into the at least one second cavity of the second element and into the first cavity of the first element so as to rotatably immobilise the first element relative to the second element.

2. The item according to claim 1, **characterised in that** the blocking member (30) is magnetic.

3. The item according to one of claims 1 and 2, **characterised in that** the first element (2) has a rod (26) fitted with a threaded endpiece (27) at one end and the assembly and indexing system (20) has a mounting bracket (21) which is mechanically fastened in the second element (3) and against which the first element is immobilised by screwing of the threaded endpiece.

4. The item according to claim 3, **characterised in that** the mounting bracket (21) has a plurality of second cavities (44) provided to at least partially receive the blocking member (30) so as to allow a plurality of positions for indexing the first element (2) relative to the second element (3).

5. The item according to one of claims 3 and 4, **characterised in that** the mounting bracket (21) has a generally cylindrical shape defining a first housing (36), the assembly and indexing system (20) has a first mounting ring (32) housed in the first housing and provided with an inner thread (50) configured to receive the threaded endpiece (27) of the first element (2).

6. The item according to claim 5, **characterised in that** the first mounting ring (32) is provided with a notched lower face (51) and the assembly and indexing system (20) furthermore has a second mounting ring (33) which is disposed facing the first mounting ring and which is provided with a notched upper face (55) which is complementary to the notched lower face of the first mounting ring.

7. The item according to claim 6, **characterised in that** the mounting bracket (21) is provided with at least one groove (49) provided in its first housing (36) and the second mounting ring (33) is provided with at least one positioning lug (56) disposed in the at least one groove.

8. The item according to one of claims 6 and 7, **characterised in that** the assembly and indexing system (20) is furthermore provided with at least one elastic member (34, 35) configured to bias the second mounting ring (33) to move it closer to the first mounting ring (32).

9. The item according to claim 8, **characterised in** the at least one elastic member (34, 35) is formed by one or more spring washers.

10. The item according to one of claims 8 and 9, **characterised in that** the assembly and indexing system (20) is furthermore provided with a cover (37) mechanically fastened to the mounting bracket (21), with the at least one elastic member being interposed between the cover and the second mounting ring (33).

11. The item according to any one of claims 1 to 10, **characterised in that** it is a portable or mobile lighting device.

12. The item according to claim 11, **characterised in that** it includes a light source (7) and a module (8) for supplying the light source, which are disposed in the body, as well as a control module formed by a control button (14) disposed on the gripping handle and by a control rod (15) passing through the gripping handle and disposed protruding in the body to the supply module for activating and/or deactivating the light source.

13. A method for assembling and/or disassembling by screwing and indexing a first element (2) with a second element (3) of an item (1) according to any of claims 1 to 12, including the steps of:
- positioning a blocking member (30) in a first cavity (29) of the first element and holding the blocking member using a tool (70) positioned opposite to the first cavity;
- assembling the first element and the second element by screwing by holding the tool in position, the item (1) being in a first configuration, to an indexing position where the blocking member faces a second cavity (44) of the second element;
- withdrawing the tool so as to position the blocking member both in the first cavity and in the second cavity and thus rotatably immobilise the first element and the second element relative to each other, the item then being in a second configuration.

14. The method according to claim 13, **characterised in that** it includes the steps of repositioning the tool (70) opposite to the first cavity (29) to extract the blocking member (30) from the second cavity (44) of the second element (3); and disassembling the first element (2) and the second element by unscrewing.
